# EUROPÄISCHE PATENTANMELDUNG

(11) **EP 3 550 186 A1**
(43) Veröffentlichungstag der Anmeldung: **09.10.2019**
(21) Anmeldenummer: 19166576.9
(22) Anmeldetag: 01.04.2019
(51) Int. Cl.: F16J 15/34

(54) **GLEITRING MIT MIKROSTRUKTUR SOWIE HERSTELLUNGSVERFAHREN DAFÜR**

(30) Priorität: 05.04.2018 DE 102018205104
(71) Anmelder: Carl Freudenberg KG, 69469 Weinheim (DE); EagleBurgmann Germany GmbH & Co. KG, 82515 Wolfratshausen (DE)
(72) Erfinder: NEUBERGER, Sören, 68766 Hockenheim (DE); GÜDEMANN, Axel, 69469 Weinheim (DE); LANG, Dr. Klaus, 82547 Eurasburg (DE); HAMFELD, Dr. Helmut, 67482 Freimersheim (DE); ALBRECHT, Wolfgang, 69509 Mörlenbach (DE)
(74) Vertreter: Hoefer & Partner Patentanwälte mbB

(57) **Zusammenfassung**

Die Erfindung betrifft einen Gleitring einer Gleitringdichtungsanordnung (1) mit einer ringförmigen Gleitfläche (20), welche durch einen inneren Umfangsrand (23) und einen äußeren Umfangsrand (24) begrenzt ist, wobei die Gleitfläche (20) Makrostrukturen (21) aufweist und wobei die Makrostruktur (21) Nuten sind, wobei die Gleitfläche Mikrostrukturen (22) aufweist, wobei die Mikrostrukturen (22) gerichtete Strukturen sind, und wobei die Mikrostrukturen (22) auf der gesamten Gleitfläche (20) ausgebildet ist.

## Beschreibung

Die vorliegende Erfindung betrifft einen Gleitring einer gasgeschmierten Gleitringdichtungsanordnung mit gezielt auf einer Gleitfläche vorgesehenen Mikrostrukturen. Ferner betrifft die Erfindung eine Gleitringdichtungsanordnung und ein Herstellungsverfahren.

Gleitringe für gasgeschmierte Gleitringdichtungsanordnungen sind aus dem Stand der Technik bekannt. Derartige Gleitringe können sog. Gasnuten als Makrostruktur auf der Gleitfläche aufweisen. Die Gasnuten stellen im Betrieb insbesondere ein schnelles Abheben der sich im Stillstand berührenden Gleitflächen voneinander sicher und ermöglichen im Betrieb eine Aufrechterhaltung eines Gaspolsters im Dichtspalt zwischen den Gleitflächen der Gleitringe. Um eine möglichst geringe Rauhheit aufzuweisen, werden die Gleitflächen der Gleitringe mittels Feinbearbeitungsverfahren wie Läppen oder Polieren behandelt. Ziel dabei ist es, die Oberfläche der Gleitflächen der Gleitringe möglichst eben auszubilden. Ein Anwendungsgebiet derartiger Gleitringe ist beispielsweise eine Abdichtung zwischen einer elektrischen Maschine und einem Getriebe, z.B. in einem Fahrzeug. Hier dichtet die Gleitringdichtung die elektrische Maschine gegenüber einem Getriebebereich ab. Hierbei muss die Gleitringdichtung mit aus dem Getriebebereich stammenden ölhaltigen Dämpfen und/oder Öltröpfchen oder dgl. zurechtkommen. Da das Fahrzeug sowohl vorwärts als auch rückwärts fahren soll, muss die Gleitringdichtung ferner auch drehrichtungsunabhängig eine Abdichtung sicherstellen. Insbesondere bei einer Umkehrung der Drehrichtung für eine Rückwärtsfahrt kann jedoch u.a. aufgrund der geringen Drehzahlen ein sehr spätes Abheben der Gleitflächen auftreten, wodurch ein Verschleiß der Gleitringe bei einer derartigen Anwendung sehr hoch ist.

Es ist daher Aufgabe der vorliegenden Erfindung, einen Gleitring, ein Verfahren zu dessen Herstellung und eine Gleitringdichtungsanordnung bereitzustellen, welche bei einfachem Aufbau und einfacher, kostengünstiger Herstellbarkeit ein sehr schnelles Abheben der Gleitflächen voneinander zu ermöglichen.

Diese Aufgabe wird durch einen Gleitring mit den Merkmalen des Anspruchs 1, eine Gleitringdichtungsanordnung mit den Merkmalen des Anspruchs 9, eine elektrische Maschine mit den Markmalen des Anspruchs 10, und ein Verfahren mit den Merkmalen des Anspruchs 11 gelöst. Die Unteransprüche zeigen jeweils bevorzugte Weiterbildungen der Erfindung.

Der erfindungsgemäße Gleitring einer gasgeschmierten Gleitringdichtungsanordnung mit den Merkmalen des Anspruchs 1 weist den Vorteil auf, dass eine besonders einfache und kostengünstige Herstellbarkeit möglich ist. Der Gleitring kann ferner in beide Drehrichtungen verwendet werden und ist dadurch besonders geeignet zur Abdichtung eines elektrischen Antriebes gegenüber einem Getriebe eines Fahrzeugs. Dies wird erfindungsgemäß dadurch erreicht, dass der Gleitring eine ringförmige Gleitfläche mit einem inneren Umfangsrand und einem äußeren Umfangsrand aufweist. Die Gleitfläche weist eine Mikrostruktur, welche eine gerichtete Struktur ist, auf. Die Mikrostruktur ist auf der gesamten Gleitfläche ausgebildet. Mit anderen Worten sind Mikrostrukturen in der Gleitfläche gezielt als gerichtete Strukturen ausgebildet, wobei diese Mikrostrukturen eine signifikante Verbesserung eines Abhebens eines Gleitrings vom Gegenring auch bei kleinen Drehzahlen ermöglichen. Weiter weist die Gleitfläche des Gleitrings Makrostrukturen auf, wobei die Makrostrukturen Nuten sind. Hierdurch kann im Betrieb eine sichere Aufrechterhaltung eines Gaspolsters im Dichtspalt zwischen den Gleitflächen, insbesondere bei hohen Geschwindigkeiten, erreicht werden. Die Nuten reichen vorzugweise bis zu einem Umfangsrand des Gleitrings und sind insbesondere an einem Umfangsrand, vorzugsweise am inneren Umfangsrand, des Gleitrings offen. Die Makrostrukturen stellen somit eine hohe Steifigkeit des Fluidfilms zwischen den Gleitflächen bei hohen Geschwindigkeiten sicher. Hierdurch ergeben sich insbesondere neue Auslegungsmöglichkeiten für Gleitringdichtungen, da bisher im Stand der Technik bei Vorsehen von makroskopischen Strukturen kein möglichst frühes Abheben der Gleitflächen erreicht wurde. Die gerichteten Strukturen sind bevorzugt linienartige Mikrovertiefungen, die in einer Hauptrichtung ohne Wendepunkt und insbesondere parallel zueinander verlaufen. D.h. die gerichtete Struktur ist insbesondere bogenförmig und wechselt nicht von einer Linkskurve in eine Rechtskurve oder umgekehrt. Hierdurch kann insbesondere auch eine Lebensdauer und eine Robustheit des Gleitrings sowie eine Verlustleistung deutlich verbessert werden. Im Gegensatz zum Stand der Technik, in welchem bisher immer versucht wird, die Gleitfläche durch Polieren oder Läppen möglichst glatt ohne Mikrostrukturen herzustellen, geht die Erfindung hier einen anderen Weg und definiert gerichtete linienartige Strukturen als Mikrostruktur auf der Gleitfläche. Somit wird auf überraschende Weise aufgrund der Mikrostrukturen durch eine gezielte Verschlechterung der Oberflächenqualität der Gleitfläche im Hinblick auf eine Rauheit trotzdem eine verbesserte Funktionalität des Gleitrings erreicht. Insbesondere kann auch das im Stand der Technik vorhandene Ansaugen der Gleitflächen bei einer Änderung der Drehrichtung durch die erfindungsgemäßen Mikrostrukturen deutlich reduziert bzw. ganz vermieden werden.

Vorzugsweise sind die gerichteten Strukturen linienartige Mikrovertiefungen, die insbesondere vom inneren Umfangsrand zum äußeren Umfangsrand verlaufen. Die gerichteten Strukturen können hierbei bevorzugt durchgängig ausgestaltet sein. Es ist jedoch auch möglich, dass die gerichteten Strukturen ausgehend vom inneren Umfangsrand zum äußeren Umfangsrand unterbrochen sind. Vorzugsweise schneiden sich die Mikrostrukturen nicht.

Besonders bevorzugt sind die gerichteten Strukturen derart ausgebildet, dass zumindest ein Teil oder bevorzugt die gesamten gerichteten Strukturen diese bogenförmig auf der Gleitfläche verlaufen. Alternativ können die gerichteten Strukturen auch geradlinig verlaufen.

Weiter bevorzugt ist ein Winkel α zwischen einer Tangente T der Mikrostrukturen an einem Punkt P an einem mittleren Durchmesser D' der Gleitfläche zu einer Geraden G, die einen Mittelpunkt M des Gleitrings mit dem Punkt P verbindet, in einem Bereich zwischen 10° und 80°, vorzugsweise 40° bis 75° und besonders bevorzugt 50° bis 70°. Durch diesen spitzen Winkel α zwischen der Tangente T und der Geraden G kann beim Start der abzudichtenden Maschine ein besonders schnelles Abheben der Gleitringe ermöglicht werden. Insbesondere kann dadurch sichergestellt werden, dass die Mikrostruktur ein Abheben der Gleitflächen schon bei sehr geringen Gleitgeschwindigkeiten abhebt.

Weiter bevorzugt ist eine Tiefe und/oder Breite einer Mikrostruktur in einem Bereich von 0,1 µm bis 2 µm, vorzugsweise 0,1 µm bis 1,25 µm, und besonders bevorzugt 0,25 µm bis 0,65 µm. Vorzugsweise haben die Makrostrukturen eine Tiefe von 0,1 µm bis 50 µm, insbesondere 4 µm bis 6 µm und weiter insbesondere 5 µm. Eine Tiefe der Makrostrukturen ist vorzugsweise immer größer als eine Tiefe der Mikrostrukturen. Ferner ist vorzugsweise eine Breite der Makrostrukturen immer größer als eine Breite der Mikrostrukturen.

Die Tiefe der Mikrostrukturen sowie der Winkel α werden vorzugsweise mittels eines Weißlichtinterferrometers ermittelt.

Eine besonders gute Funktionalität des erfindungsgemäßen Gleitrings wird erreicht, wenn bevorzugt eine Hauptrichtung der Makrostrukturen gegenläufig zu einer Hauptrichtung der gerichteten Mikrostrukturen ist. Somit können insbesondere Vorteile bei einer Anwendung in einem Fahrzeug, dessen Antrieb vorwärts- und rückwärts dreht, erzielt werden, wobei in der Hauptdrehrichtung Vorwärts die Makrostrukturen für das Abheben und die Steifigkeit bei hohen Gleitgeschwindigkeiten eingesetzt werden und bei der Rückwärts-Drehrichtung mit niedrigeren Gleitgeschwindigkeiten das Ansaugen und ein schnelles Abheben durch die Mikrostruktur ermöglicht werden. Hierbei sind besonders bevorzugt die Mikrostrukturen und die Makrostrukturen jeweils bogenförmig ausgebildet. Eine gegenläufige Anordnung der bogenförmigen Mikrostrukturen und der bogenförmigen Makrostrukturen bedeutet dabei, dass eine Steigung der bogenförmigen Mikrostrukturen ein anderes Vorzeichen als eine Steigung der bogenförmigen Makrostrukturen aufweist, beispielsweise weisen die bogenförmigen Mikrostrukturen eine positive Steigung auf und die bogenförmigen Makrostrukturen eine negative Steigung auf. Alternativ sind die bogenförmigen Mikrostrukturen und die bogenförmigen Makrostrukturen im Wesentlichen in die gleiche Richtung ausgerichtet, d.h. die bogenförmigen Mikrostrukturen und die bogenförmigen Makrostrukturen weisen eine Steigung mit gleichem Vorzeichen auf.

Eine besonders kostengünstige Herstellbarkeit und damit eine besonders gute Eignung für den Massenmarkt wird erreicht, wenn die gerichteten Mikrostrukturen Schleifstrukturen sind. Die Schleifstrukturen werden besonders bevorzugt mittels Stirnschleifen hergestellt.

Ferner betrifft die vorliegende Erfindung eine Gleitringdichtungsanordnung mit einem rotierenden Gleitring mit einer ersten Gleitfläche und einem stationären Gleitring mit einer zweiten Gleitfläche, welche zwischen den Gleitflächen einen Dichtspalt definieren, wobei wenigstens einer der Gleitringe ein erfindungsgemäßer Gleitring ist. Der erfindungsgemäße Gleitring kann dabei der rotierende Gleitring sein und/oder auch der stationäre Gleitring. Es sei jedoch angemerkt, dass es für einen sehr guten Betrieb ausreichend ist, wenn nur einer Gleitringe als erfindungsgemäßer Gleitring mit Mikrostrukturen ausgebildet ist. Der andere Gleitring kann dabei eine in üblicher Weise bearbeitete Gleitfläche, insbesondere eine möglichst ebene Gleitfläche, aufweisen.

Ferner betrifft die vorliegende Erfindung ein Verfahren zur Herstellung eines Gleitrings, umfassend die Schritte:
- Bereitstellen eines Gleitring-Grundkörpers,
- Schleifen oder Bürsten einer axialen Oberfläche des Gleitring-Grundkörpers zur Herstellung einer Gleitfläche mit als gerichtete Strukturen ausgebildeten Mikrostrukturen, und
- Einbringen von Makrostrukturen in Form von Nuten in die Gleitfläche.

Hierdurch werden die oben stehend erläuterten Vorteile sehr kostengünstig erreicht, wobei die Herstellung der Gleitringe besonders kostengünstig ausgeführt ist, so dass diese Gleitringe für einen Massenmarkt, wie z.B. in Fahrzeugen, einsetzbar sind.

Vorzugsweise werden die Mikrostrukturen mittels Stirnschleifen hergestellt.

Weiter bevorzugt werden die Makrostrukturen in Form von Nuten in die Gleitfläche eingebracht, in welcher schon die Mikrostrukturen ausgebildet sind.

Weiter bevorzugt kann auch zusätzlich eine Beschichtung auf die Gleitfläche aufgebracht werden, wobei die geometrische Formgestaltung der Gleitflächen mit Makrostrukturen und/oder Mikrostrukturen erhalten bleibt. Die Beschichtung ist vorzugsweise eine DLC-Beschichtung.

Weiter bevorzugt werden die Makrostrukturen und die Mikrostrukturen derart eingebracht, dass die Hauptrichtungen gegenläufig zueinander sind. Die als Gasnuten vorgesehenen Makrostrukturen werden weiter bevorzugt mittels eines ECM-Verfahrens (elektrochemisches Abtragen) oder mittels Stirnschleifen oder einem anderen spanenden Verfahren hergestellt. Alternativ bevorzugt sind die Makrostrukturen und Mikrostrukturen in die gleiche Richtung ausgerichtet und weisen eine Steigung mit gleichen Vorzeichen auf.

Ferner betrifft die vorliegende Erfindung eine elektrische Maschine mit einem Getriebe, wobei an einer Welle zwischen der elektrischen Maschine und dem Getriebe eine erfindungsgemäße Gleitringdichtungsanordnung abdichtet. Insbesondere kann die gasgeschmierte Gleitringdichtungsanordnung hier die Abdichtung zwischen der elektrischen Maschine und dem Getriebe, aus welchem ölhaltige Dämpfe oder Öltröpfchen oder dgl. auch in den Dichtspalt zwischen den Gleitflächen der Gleitringdichtungsanordnung gelangen können, abdichten. Auch kann dadurch eine Vorwärtsfahrt und eine Rückwärtsfahrt eines Fahrzeugs mit einem derartigen Antrieb sicher realisiert werden.

Nachfolgend wird ein bevorzugtes Ausführungsbeispiel der Erfindung unter Bezugnahme auf die begleitende Zeichnung im Detail beschrieben. In der Zeichnung ist:
- Fig. 1: eine schematische Schnittansicht einer Anordnung mit einer Gleitringdichtungsanordnung gemäß dem ersten Ausführungsbeispiel, welche zwischen einem Getriebe und einer elektrischen Maschine angeordnet ist,
- Fig. 2: eine schematische, vergrößerte Draufsicht einer Gleitfläche eines Gleitrings der Gleitringdichtungsanordnung von Fig. 1,
- Fig. 3: eine schematische Darstellung einer Gleitfläche mit Mikrostrukturen vor dem Einbringen von Makrostrukturen,
- Fig. 4: eine vergrößerte Teilausschnitts-Darstellung des Gleitrings von Fig. 3, und
- Fig. 5: eine schematische, vergrößerte Draufsicht einer Gleitfläche eines Gleitrings einer Gleitringdichtungsanordnung gemäß einem zweiten Ausführungsbeispiel der Erfindung.

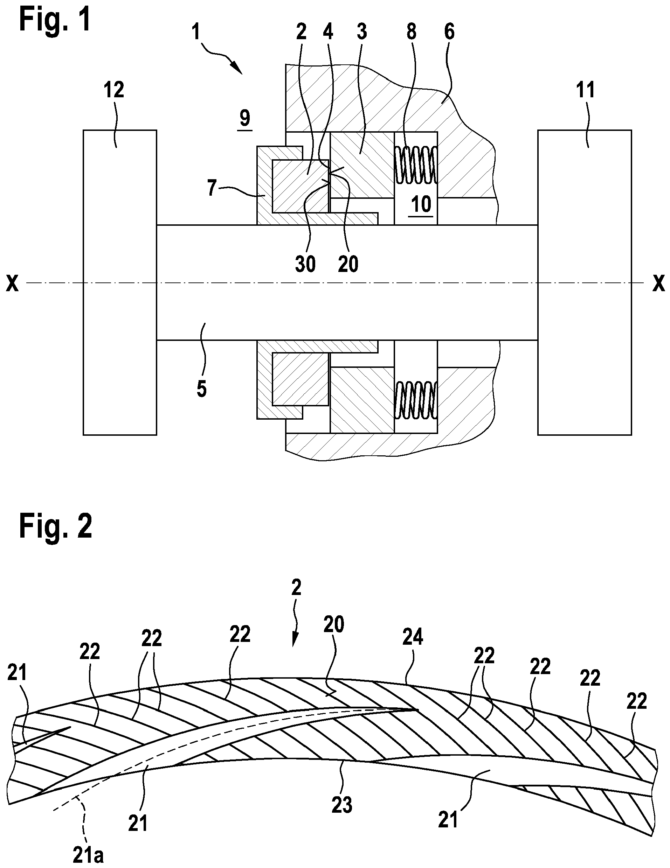

Nachfolgend wird unter Bezugnahme auf die Fig. 1 bis 4 eine gasgeschmierte Gleitringdichtungsanordnung 1 einer elektrischen Maschine mit einem erfindungsgemäßen Gleitring gemäß einem ersten Ausführungsbeispiel der Erfindung beschrieben.

Wie aus Fig. 1 ersichtlich ist, umfasst die Gleitringdichtungsanordnung 1 eine Gleitringdichtung mit einem rotierenden Gleitring 2 und einem stationären Gleitring 3, welche zwischen sich einen Dichtspalt 4 definieren. Der Dichtspalt 4 ist zwischen einer ersten Gleitfläche 20 am rotierenden Gleitring 2 und einer zweiten Gleitfläche 30 am stationären Gleitring 3 ausgebildet.

Die Gleitringdichtungsanordnung 1 dichtet an einer Welle 5 einen Raum 10, in welchem eine elektrische Maschine 11 angeordnet ist, von einem Getrieberaum 9, in welchem ein Getriebe 12 angeordnet ist, ab. Im Getrieberaum 9 können Öldämpfe und/oder Öltröpfchen oder dgl. vom Getriebe 12 vorhanden sein. Im Raum 10 ist die elektrische Maschine 11 angeordnet, welche in diesem Ausführungsbeispiel ein elektrischer Antrieb eines Fahrzeugs ist.

Die Gleitringdichtungsanordnung 1 hat die Aufgabe, die elektrische Maschine 11 vom Getrieberaum 9, insbesondere von den Öldämpfen usw. aus dem Getrieberaum 9, abzudichten. Da das elektrisch betriebene Fahrzeug sowohl in Vorwärtsfahrt als auch in Rückwärtsfahrt fahren muss, dreht sich die Welle 5 in beide Richtungen. Daher muss die Gleitringdichtungsanordnung 1 auch eine Abdichtungsleistung erbringen, welche drehrichtungsunabhängig ist.

Der rotierende Gleitring 2 ist über eine Wellenhülse 7 mit der Welle 5 verbunden. Dies ist schematisch in Fig. 1 angedeutet. Der stationäre Gleitring 3 ist mittels eines Vorspannelements 8 in Axialrichtung X-X gegen den rotierenden Gleitring 2 vorgespannt und ist an einem Gehäuse 6 angeordnet.

In den Fig. 2 bis 4 ist der rotierende Gleitring 2 im Detail dargestellt. Wie aus Fig. 2 ersichtlich ist, weist der rotierende Gleitring 2 dabei an seiner Gleitfläche 20 bogenförmige Makrostrukturen 21 in Form von Gasnuten und bogenförmige Mikrostrukturen 22 in Form von gerichteten Strukturen auf. Die Mikrostrukturen sind dabei auf der gesamten Gleitfläche ausgebildet und in Fig. 2 nur schematisch angedeutet. Die Makrostrukturen 21 verjüngen sich ausgehend vom inneren Umfangsrand.

Wie aus Fig. 2 ersichtlich ist, ist dabei eine erste Hauptrichtung 21a der Makrostrukturen 21, gekennzeichnet durch eine gestrichelte bogenförmige Mittellinie, gegenläufig zu einer zweiten Hauptrichtung der Mikrostrukturen 22, d.h. eine Steigung der bogenförmigen Mikrostrukturen weist ein anderes Vorzeichen auf, als eine Steigung der bogenförmigen Makrostrukturen. Jede Makrostruktur 21 schneidet dabei eine Vielzahl von Mikrostrukturen 22.

Die als gerichteten Strukturen ausgebildeten Mikrostrukturen 22 sind in diesem Ausführungsbeispiel Mikrokanäle, die auf der gesamten Gleitfläche verteilt ausgebildet sind. Die Mikrokanäle verlaufen dabei von einem inneren Umfangsrand 23 zu einem äußeren Umfangsrand 24 des Gleitrings 2. Die Mikrokanäle können dabei durchgehend ausgebildet sein oder auch unterbrochen sein.

Die gerichteten Strukturen der Mikrokanäle 22 können ferner in einer Bogenform auf der Gleitfläche 20 verlaufen, wie in Fig. 2 gezeigt, oder alternativ auch geradlinig verlaufen.

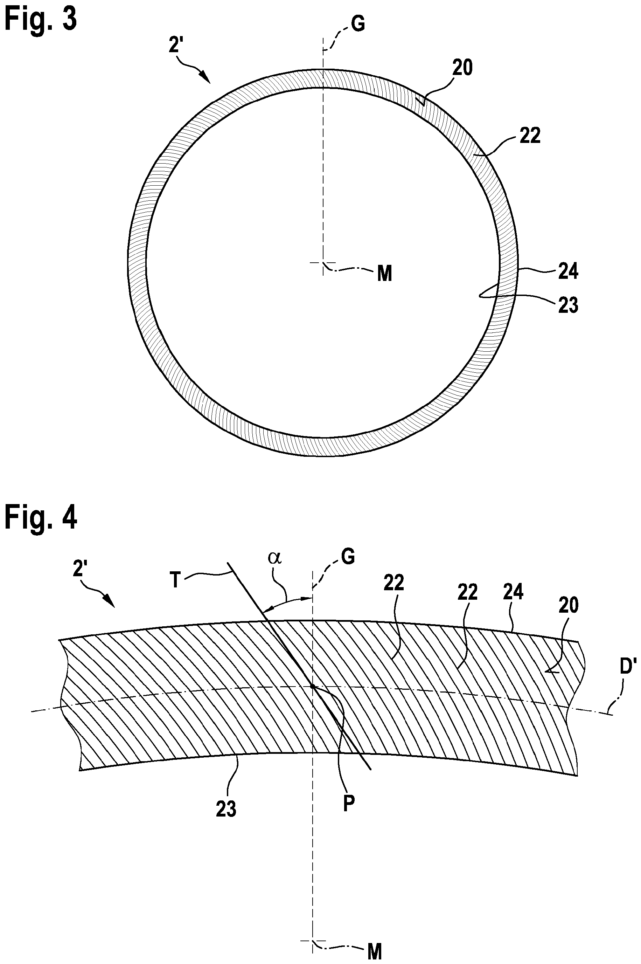

Die Fig. 3 und 4 verdeutlichen nochmals schematisch die Anordnung der Mikrostrukturen 22 in Form von gerichteten Strukturen auf der Gleitfläche 20 des Gleitrings vor dem Herstellen der Makrostrukturen. Wie insbesondere aus Fig. 4 ersichtlich ist, beginnt eine Mikrostruktur 22 am inneren Umfangsrand 23. Die Mikrostruktur 22 schneidet einen Punkt P auf einem mittleren Durchmesser D' der Gleitfläche. Die Mikrostruktur 22 ist hierbei leicht bogenförmig und eine Tangente T durch den Punkt P ist in Fig. 4 eingezeichnet. Hierbei ist ein Winkel α zwischen der Tangente T und einer Geraden G, welche durch den Punkt P und einem Mittelpunkt M des Gleitrings verläuft, in einem Bereich von 10° bis 80° und vorzugsweise ungefähr 60°.

In den Fig. 3 und 4 wird der Gleitring ohne Makrostruktur durch das Bezugszeichen 2' gekennzeichnet.

Die Fig. 3 und 4 verdeutlichen auch das mögliche und bevorzugte Fertigungsverfahren für den rotierenden Gleitring 2. Nach Bereitstellen eines Gleitring-Grundkörpers erfolgt an der Gleitfläche 20 in einem ersten Schritt die Schaffung der Mikrostruktur 22. Diese wird vorzugsweise mittels Schleifen, insbesondere mittels Stirnradschleifen, erzeugt. Hierdurch können bewusst die gerichteten Strukturen in die Gleitfläche eingebracht werden. Die gerichteten Strukturen verlaufen dabei von dem inneren Umfangsrand 23 zum äußeren Umfangsrand 24. In einem nächsten Schritt werden dann die Makrostrukturen 21 in Form von Gasnuten eingebracht. Dies kann beispielsweise mittels elektrochemischem Abtragen oder mittels spanabhebender Verfahren, wie beispielsweise Fräsen oder dgl., erfolgen. So kann ein Gleitring hergestellt werden, welcher sowohl Mikrostrukturen 22 als auch Makrostrukturen 21 aufweist.

Gegebenenfalls kann auch noch eine Beschichtung der Gleitflächen vorgenommen werden. Hier ist eine DLC-Beschichtung bevorzugt, da dadurch die Mikrostrukturen nicht vom Beschichtungsmaterial zugesetzt werden, sondern sich in der DLC-Beschichtung wieder abbilden.

Bei einem Anfahren der Maschine, d.h., aus einem Stillstand, in welchem sich die Gleitflächen 20, 30 des rotierenden und stationären Gleitrings 2 berühren, stellen nun die Mikrostrukturen 22 sicher, dass schon bei einer geringen Gleitgeschwindigkeit eine Trennung der Gleitflächen 20, 30 voneinander auftritt. Die Makrostrukturen 21 stellen dann bei einer höheren Gleitgeschwindigkeit eine hohe Steifigkeit des im Dichtspalt vorhandenen Fluidfilms bereit. Somit kann das im Stand der Technik vorhandene Problem gelöst werden, welches bei einer Auslegung von Gasnuten bei einer gasgeschmierten Gleitringdichtungsanordnung immer Kompromisse zwischen einem Anlaufzustand, d.h., einem möglichst frühzeitigen Abheben der Gleitringe, und einem stabilen Zustand während des normalen Betriebs erfordert. Dieser Zielkonflikt konnte im Stand der Technik bisher nicht zufriedenstellend gelöst werden.

Die erfindungsgemäße Lösung stellt dabei sicher, dass die Gleitflächen der gasgeschmierten Gleitringdichtungsanordnung 1 auch schon bei sehr niedrigen Gleitgeschwindigkeiten abheben. Durch die Erfindung kann, im Vergleich zum bisherigen Stand der Technik, die Gleitgeschwindigkeit, die zum Abheben der Gleitflächen notwendig ist, um z.B. 2 m/s reduziert werden, ohne die Stabilität bei hohen Drehzahlen zu verlieren. Weiterhin ist die erfindungsgemäße Gleitringdichtungsanordnung auch für einen drehrichtungsunabhängigen Betrieb ausgelegt. Insbesondere durch die gegenläufige Anordnung der Mikrostrukturen 22 zu den Makrostrukturen 21 kann dies erreicht werden.

Somit ist die Gleitringdichtungsanordnung 1 bestens für eine Abdichtung einer elektrischen Maschine 11 von einem Getriebe 12 geeignet, was eine Anwendung in Elektrofahrzeugen möglich macht.

Durch die geschickte Herstellung der Mikrostrukturen 22 mittels Stirnschleifen, kann ferner auch eine sehr kostengünstige Herstellung der Gleitringe ermöglicht werden. Dadurch ist die erfindungsgemäße Gleitringdichtungsanordnung auch für einen Massenmarkt wie bei Fahrzeugen bestens geeignet.

Im ersten Ausführungsbeispiel ist nur der rotierende Gleitring 2 mit Mikrostrukturen 22 und Makrostrukturen 21 versehen. Der stationäre Gleitring 3 weist eine wie üblich bearbeitete, d.h., mittels Läppen oder Polieren, Gleitfläche 30 auf.

Da die gerichteten Strukturen in Form von Mikrostrukturen 22 auf der Gleitfläche 20 in einem Arbeitsgang mittels Stirnschleifen erzeugt werden können, ergeben sich auch besonders gute Werte der Gleitfläche hinsichtlich einer geometrischen Form der Gleitringe.

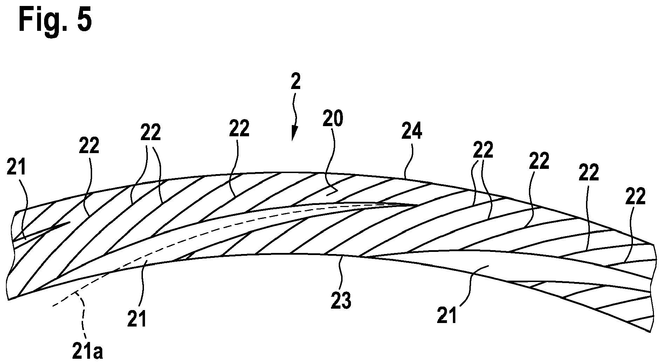

Fig. 5 zeigt einen rotierenden Gleitring 2 einer Gleitringdichtungsanordnung gemäß einem zweiten Ausführungsbeispiel der Erfindung. Im Unterschied zum ersten Ausführungsbeispiel weist der rotierende Gleitring 2 des zweiten Ausführungsbeispiels Mikrostrukturen 22 und Makrostrukturen 21 auf, welche in die gleiche Hauptrichtung ausgerichtet sind. D.h. eine Steigung der bogenförmigen Mikrostrukturen und Makrostrukturen weist das gleiche Vorzeichen auf. Hierdurch ergibt sich auch ein kreuzartiges Muster auf der Gleitfläche zwischen den Mikrostrukturen 22 und den Makrostrukturen 21. Ansonsten entspricht dieses Ausführungsbeispiel dem vorhergehenden Ausführungsbeispiel, so dass auf die dort gegebene Beschreibung verwiesen werden kann.

Somit kann, wie in vorherstehenden Ausführungsbeispielen beschrieben, durch die geschickte Kombination von Makrostrukturen 21 in Form von Gasnuten, und Mikrostrukturen 22 in Form von gerichteten Mikrovertiefungen, entweder auf einer gemeinsamen Gleitfläche oder getrennt auf einer Gleitflächenpaarung, eine deutliche Funktionsverbesserung, insbesondere bei Gleitringdichtungsanordnungen mit einer Hauptdrehrichtung (vorwärts) und einer Nebendrehrichtung (rückwärts) erreicht werden.

### Bezugszeichenliste

- 1: Gleitringdichtungsanordnung
- 2: rotierender Gleitring
- 2': rotierender Gleitring nur mit Mikrostruktur
- 3: stationärer Gleitring
- 4: Dichtspalt
- 5: Welle
- 6: Gehäuse
- 7: Wellenhülse
- 8: Vorspannelement
- 9: Getrieberaum
- 10: Raum der elektrischen Maschine
- 11: elektrische Maschine
- 12: Getriebe
- 20: Gleitfläche des rotierenden Gleitrings
- 21: Makrostruktur
- 21a: Hauptrichtung der Makrostruktur / Mittellinie einer Nut
- 22: Mikrostruktur / gerichtete Struktur mit definierter Ausrichtung
- 23: innerer Umfangsrand
- 24: äußerer Umfangsrand
- 30: Gleitfläche des stationären Gleitrings
- D': mittlerer Durchmesser
- G: Gerade
- P: Punkt einer Mikrostruktur am inneren Umfangsrand
- T: Tangente im Punkt P
- M: Mittelpunkt des Gleitrings
- X-X: Axialrichtung der Gleitringdichtungsanordnung
- α: Winkel

## Patentansprüche

1. Gleitring einer Gleitringdichtungsanordnung (1) mit:
- einer ringförmigen Gleitfläche (20), welche durch einen inneren Umfangsrand (23) und einen äußeren Umfangsrand (24) begrenzt ist,
- wobei die Gleitfläche Makrostrukturen (21) aufweist und wobei die Makrostrukturen (21) Nuten sind,
- wobei die Gleitfläche (20) Mikrostrukturen (22) aufweist,
- wobei die Mikrostrukturen (22) gerichtete Strukturen sind, und
- wobei die Mikrostrukturen (22) auf der gesamten Gleitfläche (20) ausgebildet sind.

2. Gleitring nach Anspruch 1, wobei die gerichteten Strukturen linienartige Mikrovertiefungen sind, und wobei insbesondere die gerichteten Strukturen ohne sich gegenseitig zu schneiden, angeordnet sind.

3. Gleitring nach einem der vorhergehenden Ansprüche, wobei zumindest ein Teil der gerichteten Strukturen bogenförmig auf der Gleitfläche (20) verlaufen.

4. Gleitring nach einem der vorhergehenden Ansprüche, wobei zumindest ein Teil der gerichteten Strukturen durchgängig vom inneren Umfangsrand (23) zum äußeren Umfangsrand (24) verlaufen.

5. Gleitring nach einem der vorhergehenden Ansprüche, wobei ein Winkel (α) zwischen einer Tangente (T) einer Mikrostruktur (22) an einem Punkt (P) an einem mittleren Durchmesser (D') der Gleitfläche (23) zu einer Geraden (G), die einen Mittelpunkt (M) des Gleitrings mit dem Punkt (P) verbindet, in einem Bereich zwischen 10° bis 80°, vorzugsweise 40° bis 75°, und besonders bevorzugt 50° bis 70°, liegt.

6. Gleitring nach einem der vorhergehenden Ansprüche, wobei die Mikrostruktur (22) eine Tiefe und/oder Breite von 0,1 µm bis 2 µm aufweist und/oder wobei die Makrostruktur eine Tiefe von 0,1 µm bis 50 µm aufweist.

7. Gleitring nach Anspruch 1, wobei eine Hauptrichtung (21a) der Makrostrukturen (21) gegenläufig zu einer Hauptrichtung der gerichteten Mikrostrukturen (22) ist.

8. Gleitring nach Anspruch 1, wobei eine Hauptrichtung (21a) der Makrostrukturen (21) im Wesentlichen in die gleiche Richtung ausgerichtet ist wie die gerichteten Mikrostrukturen (22).

9. Gleitringdichtungsanordnung mit einem rotierenden Gleitring (2) mit einer ersten Gleitfläche und einem stationären Gleitring (3) mit einer zweiten Gleitfläche, welche zwischen den Gleitflächen einen Dichtspalt (4) definieren, wobei wenigstens einer der Gleitringe ein Gleitring nach einem der vorhergehenden Ansprüche ist.

10. Elektrische Maschine eines Fahrzeugs, umfassend eine Gleitringdichtungsanordnung nach Anspruch 9.

11. Verfahren zur Herstellung eines Gleitrings, umfassend die Schritte:
- Bereitstellen eines Gleitring-Grundkörpers, und
- Schleifen oder Bürsten einer als Gleitfläche (20) vorgesehenen Fläche des Gleitring-Grundkörpers zur Herstellung einer Gleitfläche mit als gerichtete Strukturen ausgebildeten Mikrostrukturen (22), wobei die gerichteten Mikrostrukturen (22) durch Stirnschleifen erzeugt werden, und ferner umfassend den Schritt des Einbringens von Makrostrukturen (21) in Form von Nuten in die Gleitfläche.

12. Verfahren nach Anspruch 11, wobei die Makrostrukturen (21) mittels elektrochemischem Abtragen oder Stirnschleifen oder anderen spanenden Verfahren hergestellt werden.

13. Verfahren nach Anspruch 11 oder 12, wobei die Gleitfläche beschichtet wird, insbesondere mittels einer DLC-Beschichtung.

14. Verfahren nach einem der Ansprüche 11 bis 13, wobei die Makrostrukturen (21) und die Mikrostrukturen (22) gegenläufig eingebracht werden.
